# EUROPEAN PATENT SPECIFICATION

(11) **EP 2 642 042 B1**
(45) Date of publication and mention of the grant of the patent: **12.08.2015**
(21) Application number: 12181863.7
(22) Date of filing: 27.08.2012
(51) Int. Cl.: C04B 28/04, C04B 38/08, E04B 1/76, C04B 111/00, E04C 2/04, E04C 2/06, C04B 111/28

(54) **Thermally insulated precast wall element for vertical concrete walls application and manufacturing process**
Wärmeisoliertes, vorgeformtes Wandelement für vertikale Betonwände und Herstellungsverfahren
Élément mural préfabriqué isolé thermiquement pour application aux murs verticaux en béton et procédé de fabrication

(30) Priority: 23.03.2012 EP 12161055
(43) Date of publication of application: 25.09.2013
(73) Proprietor: Cemex Research Group AG, 2555 Brügg bei Biel (CH)
(72) Inventor: Zampini, Davide, 3250 Lyss (CH); Guerini, Alexandre, 2088 Cressier (CH)
(74) Representative: Carvajal y Urquijo, Isabel

(56) References cited:
- EP-A2- 0 808 712
- EP-A2- 1 925 760
- WO-A1-01/00921
- CH-A- 426 174
- DE-A1- 2 821 490
- DE-U1- 9 005 780
- DE-U1- 9 420 789
- DE-U1- 20 303 762
- DE-U1- 29 519 810

## Description

### TECHNICAL FIELD

The invention relates to a pre-cast wall part used in manufacturing structural walls for houses, buildings or any other constructions. The technique is based on the use of construction material poured in formworks or molds in the precast industry, in order to manufacture full walls or separate parts of structural and insulating walls that will be placed or assembled on the construction site.

The construction material is concrete-in the wide sense- using a matrix containing cement or cementitious material mixtures, water, admixtures as well as light weight aggregates of various size shapes and nature/composition.

### BACKGROUND

Concrete walls are normally thermally insulated using an additional material (either on the internal side or on the external side) since conventional concrete does not have good insulation properties.

Many techniques exists associating insulating materials and structural in the manufacture of walls. In general, these techniques use combinations of extremely different materials in layers, chosen for their performance and function. In the example of concrete walls, the structural part is ensured by the concrete and the part thermal insulation by insulating materials of type polystyrene, polyurethane, rock or glass wool, that are placed on one or both surfaces of the wall. The insulation material are either glued or fixed onto the walls.

These techniques request a succession of operations and leave obviously at least one of the sides of the wall without mechanical protection, requiring the establishment of additional layers (mortars, plaster or rigid panels for instance) to obtain an acceptable surface finish and surface resistance.

The system described by EP0322923 presents a sandwich structure which can be used for vertical applications carried out on site. The document EP0322923 describes the use of an intermediate layer dedicated to thermal insulation, made out of extruded polystyrene, and surrounded by two layers of concrete. This system provides a wall with thermal properties and structural properties and is characterized by conventional concrete rigid interior and exterior surfaces.

In the system described by EP0322923, the two layers of concrete must be poured simultaneously, with approximately the same speed to avoid breakage of the intermediate insulation layer. A sophisticated, system of anchoring in the layer of insulation in the two adjacent layers of concrete is described in the patent. Having an intermediate thermal insulation layer yields technical difficulties and constrains and significantly complicates the construction of the wall.

In the pre-cast industry, system of pre-wall incorporating and insulation material (typically extruded polystyrene - XPS) is very common (US5230191; WO9221834). All these systems are using a plate of rigid or semi rigid organic material with thermal insulating properties.

Monolithic concrete wall systems ensuring with one layer both the thermal and structural function also exist, like in WO 2009/083809. These walls have thermal conductivity values between 0.5 and 0.6 W/m*k and densities above 1.4 ton/m3. Due the relatively high values of the thermal conductivity, monolithic structures require very important thicknesses to achieve acceptable thermal insulation values for the wall.

To reach a value of 0.5 W/m2K the system described in WO 2009/083809, the wall would need to have a thickness of 1.2 m with a thermal conductivity of 0.55 W/m*k. It can clearly be seen that such a system is not suitable for structural isolated walls for which thickness is located between 0.25 and 0.7 m.

A similar wall element is also described in WO 01/00921 A1.

The present invention relates to the use of precast wall part used to manufacture final walls, that do not required the use of an organic insulated layer to achieve both thermal and structural properties since both properties are provided with special concrete mix designs.

### DESCRIPTION

The invention refers to a thermally insulated pre-cast wall part used in manufacturing structural and thermal insulated concrete walls, where mechanical strength as well as thermal properties are obtained using concrete based cast able construction materials of cementitious nature containing only mineral aggregates or air, with no requirements for additional organic based material in the form of aggregates or continuous layers to achieve important insulating properties that are not achievable with current concrete/cement-based systems.

The invention below describes a concrete based precast insulation element that can be used either in precast industry or on the job site to manufacture vertical thermal insulated walls, to obtain a final erected wall with insulation values located between 0.2 and 0.5 W/m2K.

The precast part according to the invention comprises at least 2 layers (the first concrete layer and the fabric layer)
- A first self placing concrete layer, of thickness between 100 mm and 600 mm, depending on the required thermal insulation value of the whole wall, with a mechanical strength in compression ranging from 0.1MPa to 10MPa, with a slump flow between 400 mm - 800 mm, and a thermal conductivity between 0.07 W/m*k and 0.2 W/m*k, with a density between 0.3 tons/m³ and 1 ton/m³, and with air content between 30% to 60%,
- a non-woven fabric placed on the surface of the first concrete layer, comprising fibers made of polyamide, polyamide or natural fibers with a phenolic resin as a binder of the lattice, having the non-woven fabric a density between 40 and 200 Kg/m3 and a thickness above 3 mm, more likely between 3 mm and 30 which remains impermeable to the first concrete layer as well as to any additional concrete layer that will be added on its surface, so that the core of the non-woven fabric remains free from concrete, preferably, the minimum section of the non-woven fabric free from concrete layer/s is around 1 mm to 2 mm,
- Additionally, a mortar with a thickness from 0.5 - 10 mm may cover the surface of the first concrete layer on the side opposite to the side covered by the fabric. The mortar M shall have a strength of at least 15 MPa.

The precast part according to the invention provide a concrete based insulation that is then used in combination with other concrete to manufacture vertical concrete walls for any type of building in construction. According to the invention, the precast part can be typically used in different ways.

According to a second aspect of the invention, the precast part comprising at least a first concrete layer covered by a fabric is, in addition, covered by a second structural concrete layer of thickness between 80mm to 200mm, depending on the required strength, with a density between 2.4 tons/m3 and 1.2 tons/m³, with mechanical strength in compression based on standard EN normed cubes after 28 days > 20 MPa, (ranging from 20 to 60 MPa) and with thermal conductivity in the range 2.2 and 0.2 W/m*k. In a preferred embodiment, the second concrete will have self placing properties with a slump flow between 400 mm - 800 mm and anchorage will issue from the rheological properties of the concrete into the surface of the non-woven fabric, avoiding the use of vibration while placed on the fabric and the first fresh concrete layer. In addition, the second concrete layer may include steel or polymer rebars or fibers to enhance the structural properties.

According to a third aspect of the invention, the pre-cast part comprising at least the first concrete layer and the textile is cured and then transported on the job site. The precast part is erected as one side part of the wall mould, while a conventional framework is erected parallel to the pre cast part to build the second part of the mould. Spacers are used to maintain a constant distance of 80 to 200 mm between the fabric layer and the framework. The second concrete is then classically casted into the space maintained between the fabric and the opposite framework. Conventionally, the space between the fabric layer and the framework, which defines the space for the second concrete layer, will host the structural rebars of the wall.

The final concrete wall, encompassing the first insulation concrete layer, the second structural concrete layer and the fabric layer provides thermal properties with an insulation value of the wall between 0.2 and 0.5 W/m2K.

The fabric has an important open connected porosity which allows the anchorage of each concrete layer superficially on both sides, although the fabric is selected to be impermeable to each of the concrete layers so that it can act as a separation layer while casting the second concrete layer.

The fabric ensures that the two concrete layers are not coming in direct contact and assures the mechanical liaison between the two concrete layers as well as the relative movement between the two layers by elastic deformation.

Alternatively, the non-woven fabric could be of non-woven geo-textile type. The final structural concrete wall with thermal insulation enables that shear stresses that could result from the differential thermal expansion of the two concrete layers are accommodated by elastic deformation of the non impregnated core of the non-woven fabric. The first concrete layer has a thermal expansion that is at least 3-5 times lower than the structural concrete (3*10⁻⁶ m/m*°C for a thermal conductivity value of 0.15 W/m*K compared to 11*10⁻⁶ m/m*°C for a structural concrete (second) concrete with a thermal conductivity of 0.5 W/m*K).

The anchorage of the first concrete layer is enabled by its rheological properties, namely its fluidity and viscosity.

Alternatively, the first concrete layer will have self placing properties with a slump flow between 400 mm - 800 mm and anchorage will issue from the rheological properties of the concrete into the surface of the non-woven fabric.

If the second concrete is placed on the job following the third aspect of the invention, vibration means shall be used (needle) to ensure good anchorage of the second concrete layer into the surface of the non-woven fabric should none self placing concrete by applied.

The described insulated precast wall element is suitable for manufacturing complete walls in precast as well as jobsite operations, where the final wall is composed of at least two concrete layers with different properties in the fresh and hardened state whereas the fabric, located between them, plays another important role in accommodating the respective thermal expansions of both first and second concrete layers, to avoid that shear cracks appear at the interface between the two concrete layers.

The present invention overcomes the disadvantages of the known prior art, in that:
- It enables to obtain a sandwich structure with at least two different concrete layers ,
- It does not use intermediate thermal insulation layers
- The thermal properties are provided by a first concrete layer,
- The structural properties are provided by a second concrete layer,
- The exterior and interior surfaces are rigid concrete,
- The level of thermal insulation values obtained in the final sandwich wall for a given thickness is substantially enhanced compared to a monolithic light concrete wall.

The advantages of the wall system according to the invention are thus easy to understand:
- The dimensions of the final wall are designed based on the mechanical requirements (composition and thickness of the layer of the second concrete layer), and insulation requirements (composition and thickness of first concrete layer and composition and thickness of the second concrete layer).
- Overall final wall thickness can be optimized by minimizing the second concrete layer thickness with regard to the first concrete layer.
- The fabric layer enables mechanical anchorage of the two concrete layers in its surface open porosity, while the core of the fabric remains unfilled by concrete.
- The flexible core of the fabric layer will thus accommodate shear stresses arising from the different thermal expansion properties of both concrete layers, without creating cracks at the interface between the two concrete layers.
- The combination of the structural and thermal concrete layers enables to maintain the final wall thickness between 0.3 to 0.7 m while reaching an insulation values between 0.2 to 0.5 W/m2K.

In the precast industry, the sizes of the moulds are typically of size 3-10 (length) and 2-4 m (width) and the size limitations are mainly imposed by transportation constrains.

Conventional pre-casted walls, with or without inserted organic layer of insulating material always have a void between the 2 parallel walls that will be filled by concrete on the job site, therefore, the transportation volume is more important.

According to a first aspect of the invention preferred embodiment of the invention, a first part A of the final wall is manufactured, providing conventional means to assemble the parts to build and erect final walls on the jobsite (joint seats, holes for fixing, etc.).

Step 1: The first concrete is casted with the respective final thickness (100 mm to 600 mm), horizontally, either directly on the mould surface or on an initial dense and not foamed mortar or concrete layer with a small thickness, typically of some centimeters. The concrete used for the mortar or concrete layer may be self leveling or not. In case the concrete or mortar used in this layer is not self compactable, conventional vibrating mould equipment shall be used to vibrate the concrete used. This mortar or concrete layer is aimed at providing a mechanical resistance to wear and shocks that is higher than the one of the first concrete and will then protect the external surface of the wall once erected. The strength of the layer 4 shall be higher than 15 Mpa.

Step 2: The whole surface of the first concrete is then covered with the fabric that is pressed into the fresh second concrete to ensure the anchorage of the cement paste of the concrete into the fabric, leaving the core and the adjacent surface of the fabric concrete-free.

Step 3: The part A is then cured to reach the required strength for transportation.

According to a second aspect to the invention, the additional following steps are included after step 2:
Step 2.1: A second structural self placing concrete is casted with the respective final thickness (80 mm to 200 mm) horizontally on the surface of the fabric to build a part B that includes the part A.
Step 2.2: The part B is cured to reach the required strength for transportation
Step 2.3: The parts B are erected and assembled on the job site to build walls.

According to a third aspect to the invention, the additional following steps are included after step 3 described here above:
Step 3.1: The parts A are transported to the job site.
Step 3.2: The parts A are erected and assembled to build a first member of a framework.
Step 3.3: A second conventional frame work member with similar dimensions as the part A is erected parallel to the parts A, to maintain a constant distance between the fabric layer and the second frame work member over the full height of the wall, that is ensured typically by conventional spacers.
Step 3.4: The second structural concrete is casted vertically between the fabric layer and the second frame work member.
Step 3.5: the second frame work member is removed once the second concrete has achieved sufficient strength (typically some days).

### BRIEF DESCRIPTION OF THE DRAWINGS

The description of the different components of the system provided above is complemented with a drawing aimed at facilitating understanding of its structure and operation.
Figure 1 shows a cross sectional view of the precast wall part according to the invention.
Figure 2 shows a cross sectional view of the wall part according to a second aspect of the invention, with an additional concrete layer to build a concrete wall.
Figure 3 shows a cross sectional view of the wall part according to a third aspect of the invention to build a concrete wall.
Figure 4 show a microscopic picture of the non woven fabric.

### DETAILED DESCRIPTION OF THE INVENTION

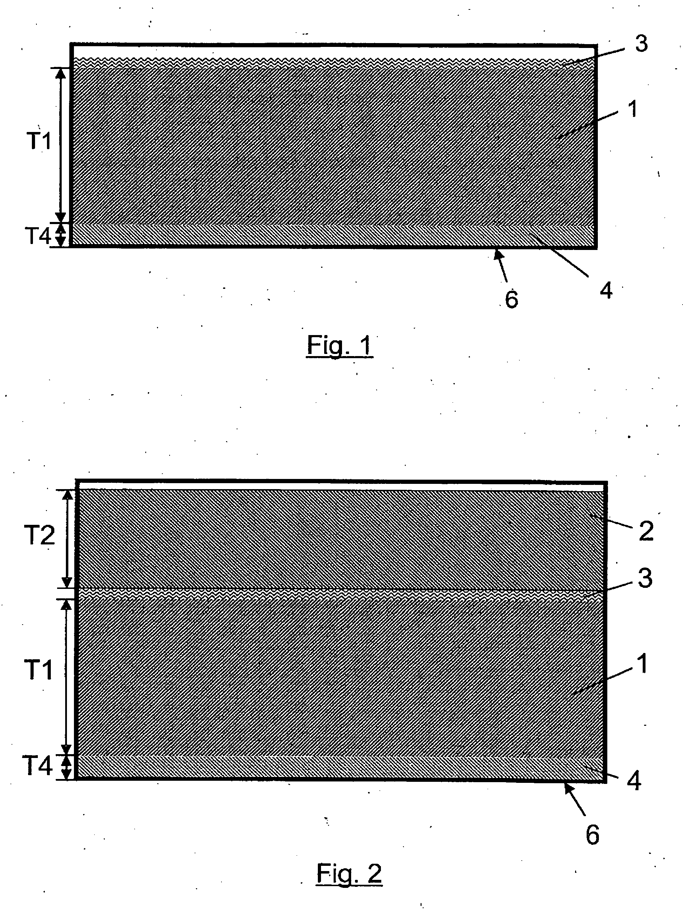

Figure 1 shows a cross sectional view of the precast part A according to the invention, with a first concrete layer (1) casted into a pre-cast mold (6) having thermal insulation properties and a thickness T1 and a separation textile of non-woven fabric (3) placed on the surface of the first concrete layer (1) and an optional thin superficial concrete or mortar layer (4) of thickness T4.

According to a first embodiment, the precast part A comprises a first concrete layer (1) with a density of around 280 kg/m3, corresponding to the composition of Table 1.

Superplastizers of type PCE, polycarboxilate, are added to the concrete mix design to achieve the required self placing properties.

**Table 1**

| **Constituents** | **Composition First Concrete layer (1) (Kg/m3)** |
|---|---|
| Cement CEM I | 165 |
| Fly Ash | 110 |
| Silica fume | |
| Expanded glass aggregates A 0.1mm/0.7mm | 67 |
| Expanded glass aggregates 1mm/2mm | - |
| Expanded clay aggregates 2mm/10mm | - |
| Expanded glass aggregates B 0.25mm/0.5mm | 38 |
| Expanded glass aggregates C 2mm/4mm | 58 |
| Water | 101 |
| PCE | 5.5 |
| Air entrainer | 1.4 |

In this example, the first concrete layer (1) is using one type of lightweight aggregates with three different ranges of sizes:
- A from 0.1 mm to max 0.7 mm,
- B from 0.25 mm to 0.5 mm,
- C from 2 mm to 4 mm.

Alternatively, the first concrete layer (1) can be designed with two types of aggregates, namely additional expanded clay aggregates of size range 2 mm-10 mm. Also, the first concrete may contain synthetic fibers with typical dosages in the range 0.01-0.5% by volume of concrete I.

Figure 2 shows a concrete wall manufactured based on the precast part A having a second structural concrete layer (2) of thickness T2, typically made from a self placing concrete and described in the Table 2:

**Table 2**

| **Constituents** | **Composition second Concrete Layer (2) (Kg/m3)** |
|---|---|
| Cement CEM I | 282 |
| Fly Ash | 239 |
| Silica fume | 17 |
| Expanded glass aggregates A 0.1mm/0.7mm | 62 |
| Expanded glass aggregates 1mm/2mm | 29 |
| Expanded clay aggregates 2mm/10mm | 466 |
| Expanded glass aggregates B 0.25mm/0.5mm | - |
| Expanded glass aggregates C 2mm/4mm | - |
| Water | 185 |
| PCE | 11.3 |
| Air entrainer | 0 |

The second concrete layer (2) is using simultaneously expanded clay and expanded aggregates whereas the expanded clay represents at least 60% of the total aggregates (in weight).

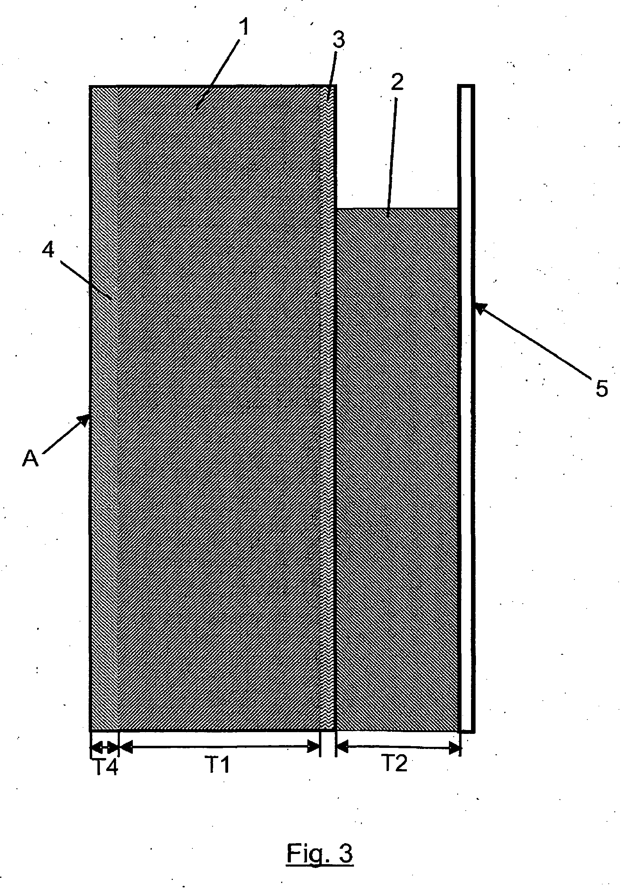

Figure 3 shows the part A according to the invention that is used on the job site as one framework member. The second structural concrete layer (2) is casted in the space delimited on one side by the fabric (3) attached to the concrete layer (1) to form the part A and a second framework member (5).

Table 2 summarizes examples of the properties obtained for the two concretes:

**Table 3**

| **Properties** | **First Concrete layer (1)** | **Second Concrete layer (2)** |
|---|---|---|
| Compressive Strenght (MPa) | 2 | 29 |
| Density | 495 | 1289 |
| Thermal conductivity W/m*k | 0.09 | 0.38 |
| Air content | 45% | 7% |

As a result, the insulation value for a wall according to this embodiment, with a thickness of the first concrete layer of 150 mm and a thickness of the second concrete layer of 200 mm, would be around 0.36 W/m2K.

Increasing the thickness of the second concrete layer to 300 mm enables to achieve an overall insulation value to 0.26 W/m2K.

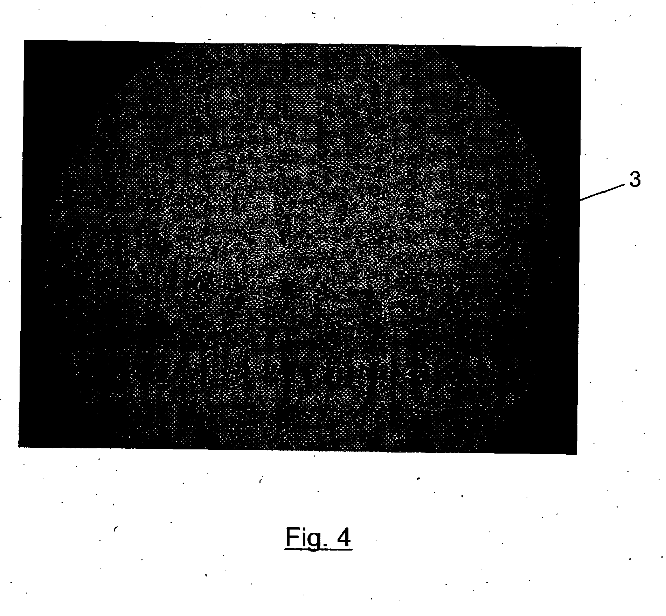

Figure 4 shows a microscopy of the non-woven fabric where the fibers and the gaps between the fibers are clearly visible to enable the anchorage of both concrete layers in the structure.

## Claims

1. Thermally insulated precast wall element for vertical concrete walls application, the wall element being made of at least 2 layers:
a) a first concrete layer (1), of thickness (T1) from 100 to 600 mm, the concrete of this first layer (1) having the following characteristics:
- strength in compression ranging from 0.1 MPa to 10MPa,
- slump flow between 400 mm - 800 mm,
- thermal conductivity between 0.07 W/m*k and 0.2 W/m*k,
- density between 0.3 tons/m³ and 1 ton/m³, and
- air content between 30% to 60%,
and
b) a non-woven fabric (3) placed on the surface of the first concrete layer (1), such that an anchorage is created between the surface open porosity of the fabric and the surface of the first concrete layer (1), the non-woven fabric comprising fibers made of polyamide or natural fibers with a phenolic resin as a binder of the lattice; the non-woven fabric having a density between 40 and 200 Kg/m3 and a thickness above 3 mm, so that the core of the non-woven fabric, with a thickness of at least 1 mm, remains free from concrete.

2. Thermally insulated precast wall element according to claim 1, further comprising a mortar or concrete layer (4) with a thickness (T4) from 0.5 to 10 mm, covering the surface of the first concrete layer (1) on the side opposite to the side covered by the fabric (3).

3. Thermally insulated precast wall element according to claim 1 or 2, further comprising a second concrete layer (2), with a thickness (T2) from 80 mm to 200 mm, cast onto the surface of the fabric (3), the concrete of this second layer (2) having the following characteristics:
- slump flow between 400 mm - 800 mm,
- thermal conductivity between 2.2 and 0.2 W/m*k,
- density between 1.2 tons/m³ to 2.4 tons/m³, and
- a mechanical strength in compression higher than 20 MPa at 28 days;
such that the overall insulation value ranges from 0.2 to 0.5 W/m2K.

4. Manufacturing process of thermally insulated precast wall element for vertical concrete walls application, **characterized by** comprising the steps of:
- horizontally casting in a pre-cast mold (6) a first concrete layer (1), of thickness (T1) from 100 to 600 mm, the concrete of this first layer (1) having the following characteristics:
• strength in compression ranging from 0.1MPa to 10MPa,
• slump flow between 400 mm - 800 mm,
• thermal conductivity between 0.07 W/m*k and 0.2 W/m*k,
• density between 0.3 tons/m³ and 1 ton/m³, and
• air content between 30% to 60%,
- covering the surface of the first concrete layer (1) with a non-woven fabric (3), such that an anchorage is created between the surface open porosity of the fabric and the surface of the first concrete layer (1), the non-woven fabric comprising fibers made of polyamide or natural fibers with a phenolic resin as a binder of the lattice, the non-woven fabric having a density between 40 and 200 Kg/m3 and a thickness above 3 mm, so that the core of the non-woven fabric, with a thickness of at least 1 mm, remains free from concrete.

5. Manufacturing process of thermally insulated precast wall element according to claim 4, further comprising, prior to the casting of the first concrete layer (1), horizontally casting in the pre-cast mold (6) a mortar or concrete layer (4) with a thickness (T4) from 0.5 to 10 mm, such that the first concrete layer (1) is casted onto this mortar or concrete layer (4), the latter covering the surface of the first concrete layer (1) on the side opposite to the side covered by the fabric (3).

6. Manufacturing process of thermally insulated precast wall element according to claim 4 or 5, further comprising horizontally casting in the pre-cast mold (6) a second concrete layer (2), with a thickness (T2) from 80 mm to 200 mm, onto the surface of the fabric (3), the concrete of this second layer (2) having the following characteristics:
- slump flow between 400 mm - 800 mm,
- thermal conductivity between 2.2 and 0.2 W/m*k,
- density between 1.2 tons/m³ to 2.4 tons/m³, and
- a mechanical strength in compression higher than 20 MPa at 28 days;
such that the overall insulation value ranges from 0.2 to 0.5 W/m2K.

7. Manufacturing process of thermally insulated precast wall element according to claim 4 or 5, further comprising vertically casting on the job site a second concrete layer (2), with a thickness (T2) from 80 mm to 200 mm, between the fabric layer (3) and a frame work member (5), the concrete of this second layer (2) having the following characteristics:
- slump flow between 400 mm - 800 mm,
- thermal conductivity between 2.2 and 0.2 W/m*k,
- density between 1.2 tons/m³ to 2.4 tons/m³, and
- a mechanical strength in compression higher than 20 MPa at 28 days;
such that the overall insulation value ranges from 0.2 to 0.5 W/m2K.

## Patentansprüche

1. Wärmegedämmtes, vorgeformtes Wandelement für Anwendungen für senkrechte Betonwände, wobei das Wandelement aus mindestens 2 Schichten hergestellt wird:
a) aus einer ersten Betonschicht (1) mit einer Dicke (T1) von 100 bis 600 mm, wobei der Beton dieser ersten Schicht (1) die folgenden Eigenschaften aufweist:
- Druckfestigkeit im Bereich von 0,1 MPA bis 10 MPa,
- Setzfluss zwischen 400mm - 800 mm,
- Wärmeleitfähigkeit zwischen 0,07 W/m*k und 0,2 W/m*k,
- Dichte zwischen 0,3 Tonnen/m³ und 1 Tonne/m³, und
- Luftgehalt zwischen 30% bis 60%,
und
b) aus einem Faservliesstoff (3), der auf der Oberfläche der ersten Betonschicht (1) angeordnet wird, so dass eine Verankerung zwischen der offenen Porosität der Oberfläche des Stoffs und der Oberfläche der ersten Betonschicht (1) erzeugt wird, wobei der Faservliesstoff Fasern aus Polyamid oder natürliche Fasern mit einem Phenolharz als Bindemittel des Gitters umfasst, wobei der Faservliesstoff eine Dichte zwischen 40 und 200 kg/m3 und eine Dicke von mehr als 3mm aufweist, so dass der Kern des Faservliesstoffs mit einer Dicke von mindestens 1 mm frei von Beton bleibt.

2. Wärmegedämmtes, vorgeformtes Wandelement nach Anspruch 1, das ferner eine Mörtel- oder Betonschicht (4) mit einer Dicke (T4) von 0,5 mm bis 10 mm umfasst, die die Oberfläche der ersten Betonschicht (1) auf der Seite bedeckt, die der von dem Stoff (3) bedeckten Seite gegenüberliegt.

3. Wärmegedämmtes, vorgeformtes Wandelement nach Anspruch 1 oder 2, das ferner eine zweite Betonschicht (2) mit einer Dicke (T2) von 80 mm bis 200 mm umfasst, die auf die Oberfläche des Stoffs (3) gegossen wird, wobei der Beton dieser zweiten Schicht (2) die folgenden Eigenschaften aufweist:
- Setzfluss zwischen 400mm - 800 mm,
- Wärmeleitfähigkeit zwischen 2,2 W/m*k und 0,2 W/m*k,
- Dichte zwischen 1,2 Tonnen/m³ und 2,4 Tonnen/m³, und
- eine mechanische Druckfestigkeit von mehr als 20 MPa nach 28 Tagen;
so dass der Gesamtdämmungswert im Bereich von 0,2 bis 0,5 W/m2K liegt.

4. Herstellungsverfahren für ein wärmegedämmtes, vorgeformtes Wandelement für Anwendungen für senkrechte Betonwände, **dadurch gekennzeichnet, dass** es die folgenden Schritte umfasst:
- waagrechtes Gießen einer ersten Betonschicht (1) mit einer Dicke (T1) von 100 mm bis 600 mm in einer vorgeformten Form (6), wobei der Beton dieser ersten Schicht (1) die folgenden Eigenschaften aufweist:
• Druckfestigkeit im Bereich von 0,1 MPa bis 10 MPa
• Setzfluss zwischen 400mm - 800 mm,
• Wärmeleitfähigkeit zwischen 0,07 W/m*k und 0,2 W/m*k,
• Dichte zwischen 0,3 Tonnen/m³ und 1 Tonne/m³, und
• Luftgehalt zwischen 30% bis 60%;
- Bedecken der Oberfläche der ersten Betonschicht (1) mit einem Faservliesstoff (3) derart, dass eine Verankerung zwischen der offenen Porosität der Oberfläche des Stoffs und der Oberfläche der ersten Betonschicht (1) erzeugt wird, wobei der Faservliesstoff Fasern aus Polyamid oder natürliche Fasern mit einem Phenolharz als Bindemittel des Gitters umfasst, wobei der Faservliesstoff eine Dichte zwischen 40 und 200 kg/m3 und eine Dicke von mehr als 3mm aufweist, so dass der Kern des Faservliesstoffs mit einer Dicke von mindestens 1 mm frei von Beton bleibt.

5. Herstellungsverfahren für ein wärmegedämmtes, vorgeformtes Wandelement nach Anspruch 4, das ferner vor dem Gießen der ersten Betonschicht (1) das waagrechte Gießen einer Mörtel- oder Betonschicht (4) mit einer Dicke (T4) von 0,5 bis 100 mm in der vorgeformten Form (6) derart umfasst, dass die erste Betonschicht (1) auf diese Mörtel- oder Betonschicht (4) gegossen wird, wobei Letztere die Oberfläche der ersten Betonschicht (1) auf der Seite bedeckt, die der von dem Stoff (3) bedeckten Seite gegenüberliegt.

6. Herstellungsverfahren für ein wärmegedämmtes, vorgeformtes Wandelement nach Anspruch 4 oder 5, das ferner das waagrechte Gießen einer zweiten Betonschicht (2) mit einer Dicke (T2) von 80 mm bis 200 mm in der vorgeformten Form (6) auf die Oberfläche des Stoffs (3) umfasst, wobei der Beton dieser zweiten Schicht (2) die folgenden Eigenschaften aufweist:
- Setzfluss zwischen 400mm - 800 mm,
- Wärmeleitfähigkeit zwischen 2,2 und 0,2 W/m*k,
- Dichte zwischen 1,2 Tonnen/m³ und 2,4 Tonnen/m³, und
- eine mechanische Druckfestigkeit von mehr als 20 MPa nach 28 Tagen;
so dass der Gesamtdämmungswert im Bereich von 0,2 bis 0,5 W/m2K liegt.

7. Herstellungsverfahren für ein wärmegedämmtes, vorgeformtes Wandelement nach Anspruch 4 oder 5, das ferner das senkrechte Gießen, auf der Baustelle, einer zweiten Betonschicht (2) mit einer Dicke (T2) von 80 mm bis 200 mm zwischen die Stoffschicht (3) und ein Rahmenelement (5) umfasst, wobei der Beton dieser zweiten Schicht (2) die folgenden Eigenschaften aufweist:
- Setzfluss zwischen 400mm - 800 mm,
- Wärmeleitfähigkeit zwischen 2,2 und 0,2 W/m*k,
- Dichte zwischen 1,2 Tonnen/m³ und 2,4 Tonnen/m³, und
- eine mechanische Druckfestigkeit von mehr als 20 MPa nach 28 Tagen;
so dass der Gesamtdämmungswert im Bereich von 0,2 bis 0,5 W/m2K liegt.

## Revendications

1. Élément mural préfabriqué isolé thermiquement pour leur application aux murs en béton verticaux, l'élément mural étant fait d'au moins deux couches :
a) une première couche de béton (1), d'une épaisseur (E1) entre 100 et 600 mm, le béton de cette première couche (1) ayant les caractéristiques suivantes :
- force de compression comprise entre 1,1 MPa et 10 MPa,
- affaissement entre 400 mm - 800 mm,
- conductivité thermique entre 0,07 W/m*k et 0,2 W/m*k,
- densité entre 0,3 tonnes/m³ et 1 tonne/m³, et
- teneur en air entre 30 % et 60 %,
et
b) un tissu non-tissé (3) placé sur la surface de la première couche de béton (1), de sorte qu'un ancrage est créé entre la porosité ouverte de la surface du tissu et la surface de la première couche de béton (1), le tissu non-tissé comprenant des fibres faites en polyamide ou en fibres naturelles avec une résine phénolique comme liant du treillis, le tissu non-tissé ayant une densité entre 40 et 200 kg/m³ et une épaisseur au-dessus de 3 mm, de sorte que le coeur du tissu non-tissé, avec une épaisseur d'au moins 1 mm, reste exempt de béton.

2. Élément mural préfabriqué isolé thermiquement selon la revendication 1, comprenant en outre un mortier ou une couche de béton (4) avec une épaisseur (E4) entre 0,5 à 10 mm, recouvrant la surface de la première couche de béton (1) sur le côté opposé au côté recouvert par le tissu (3).

3. Élément mural préfabriqué isolé thermiquement selon la revendication 1 ou 2, comprenant en outre une deuxième couche de béton (2), avec une épaisseur (E2) entre 80 mm à 200 mm, coulée sur la surface du tissu (3), le béton de cette deuxième couche (2) ayant les caractéristiques suivantes :
- affaissement entre 400 mm - 800 mm,
- conductivité thermique entre 2,2 et 0,2 W/m*k,
- densité entre 1,2 tonnes/m³ et 2,4 tonnes/m³, et
- une force mécanique de compression supérieure à 20 MPa à 28 jours ;
de sorte que la valeur globale de l'isolation est comprise entre 0,2 et 0,5 W/m2K.

4. Procédé de fabrication d'un élément mural préfabriqué isolé thermiquement pour une application aux murs en béton verticaux, **caractérisé en ce qu'**il comprend les étapes de :
- coulage horizontal dans un moule précoulé (6) d'une première couche de béton (1), d'une épaisseur (E1) entre 100 et 600 mm, le béton de cette première couche (1) ayant les caractéristiques suivantes :
• force de compression comprise entre 0,1 MPa et 10 MPa,
• affaissement entre 400 mm - 800 mm,
• conductivité thermique entre 0,07 W/m*k et 0,2 W/m*k,
• densité entre 0,3 tonnes/m³ et 1 tonne/m³, et
• teneur en air entre 30 % et 60 %,
- recouvrement de la surface de la première couche de béton (1) avec un tissu non-tissé (3), de sorte qu'un ancrage est créé entre la porosité ouverte de la surface du tissu et la surface de la première couche de béton (1), le tissu non-tissé comprenant des fibres faites en polyamide ou en fibres naturelles avec une résine phénolique comme liant du treillis, le tissu non-tissé ayant une densité entre 40 et 200 kg/m³ et une épaisseur au-dessus de 3 mm, de sorte que le coeur du tissu non-tissé, avec une épaisseur d'au moins 1 mm, reste exempt de béton.

5. Procédé de fabrication d'un élément mural préfabriqué isolé thermiquement selon la revendication 4 comprenant en outre, avant le coulage de la première couche de béton (1), le coulage horizontal dans le moule précoulé (6) d'un mortier ou d'une couche de béton (4) avec une épaisseur (E4) entre 0,5 et 10 mm, de sorte que la première couche de béton (1) est coulée dans ce mortier ou cette couche de béton (4), ce dernier recouvrant la surface de la première couche de béton (1) sur le côté opposé au côté recouvert par le tissu (3).

6. Procédé de fabrication d'un élément mural préfabriqué isolé thermiquement selon les revendications 4 ou 5, comprenant en outre le coulage horizontal dans le moule précoulé (6) d'une deuxième couche de béton (2), avec une épaisseur (E2) entre 80 mm et 200 mm, sur la surface du tissu (3), le béton de cette deuxième couche (2) ayant les caractéristiques suivantes :
- affaissement entre 400 mm - 800 mm,
- conductivité thermique entre 2,2 et 0,2 W/m*k,
- densité entre 1,2 tonne/m³ et 2,4 tonnes/m³, et
- une force mécanique de compression supérieure à 20 MPa à 28 jours ;
de sorte que la valeur de l'isolation globale est comprise entre 0,2 et 0,5 W/m2K.

7. Procédé de fabrication d'un élément mural préfabriqué isolé thermiquement selon les revendications 4 ou 5, comprenant en outre le coulage vertical sur le site de travail d'une deuxième couche de béton (2), avec une épaisseur (E2) entre 80 mm et 200 mm, entre la couche de tissu (3) et un membre de la structure (5), le béton de cette deuxième couche (2) ayant les caractéristiques suivantes :
- affaissement entre 400 mm - 800 mm,
- conductivité thermique entre 2,2 et 0,2 W/m*k,
- densité entre 1,2 tonne/m³ à 2,4 tonnes/m³, et
- une force mécanique de compression supérieure à 20 MPa à 28 jours ;
de sorte que la valeur d'isolement globale est comprise entre 0,2 et 0,5 W/m2K.
